# FASCICULE DE BREVET EUROPEEN

(11) **EP 0 868 676 B1**
(45) Date de publication et mention de la délivrance du brevet: **22.11.2000**
(21) Numéro de dépôt: 96934954.7
(22) Date de dépôt: 22.10.1996
(51) Int. Cl.: G02C 1/04

(54) **DISPOSITIF DE FIXATION DES VERRES SUR UNE MONTURE DE LUNETTES**
VORRICHTUNG ZUR BEFESTIGUNG VON LINSEN IN EINEM BRILLENGESTELL
DEVICE FOR FIXING LENSES TO A SPECTACLES FRAME

(30) Priorité: 22.12.1995 FR 9515386
(43) Date de publication de la demande: 07.10.1998
(73) Titulaire: Perie, Jean-Claude, 82003 Montauban (FR)
(72) Inventeur: Perie, Jean-Claude, 82003 Montauban (FR)
(74) Mandataire: Jaunez, Xavier
(86) Numéro de dépôt international: FR9601651
(87) Numéro de publication internationale: WO9723802

(56) Documents cités:
- EP-A- 0 093 108
- FR-A- 2 489 970
- FR-A- 2 701 573
- GB-A- 2 102 150
- US-A- 5 073 020

## Description

L'invention concerne le domaine des lunettes, et plus précisément la fixation des verres sur une monture de lunettes au moyen d'un dispositif comportant pour chaque verre un élément souple de cerclage passant dans un drageoir ou gorge associé et s'accrochant sur la monture de part et d'autre du verre.

On connaît déjà depuis une cinquantaine d'années la technique de fixation des verres consistant à utiliser des éléments souples de cerclage, en général un brin de fil de nylon ou d'acier, entourant une partie plus ou moins importante de chaque verre. Cette technique est en effet séduisante par l'effet de légèreté et de discrétion qu'elle procure pour la personne qui porte les lunettes ainsi équipées.

Cependant, les constructeurs ont eu à se pencher sur le problème délicat de l'organisation de l'accrochage de tels éléments souples sur la monture de lunettes, et diverses solutions ont ainsi été proposées.

De nombreuses solutions prévoient de percer la monture pour faire passer le fil souple et y bloquer l'extrémité du fil, soit par une surépaisseur terminale du fil (voir par exemple les documents GB-A-2 102 150 FR-A-2.504.694, FR-A-2.489.970, US-A-2.516.549, FR-A-1.156.468), soit par un noeud (voir par exemple les documents US-A-2.516.549, FR-A-2.506.958, FR-A-2.701.573, EP-A-0.643.316), soit encore par un décrochement du fil qui peut être simple (voir le document GB-A-775.293), ou double selon une technique dite du double trou (voir par exemple les documents FR-A-1.094.381, FR-A-1.270.904, FR-A-2.509.058, FR-A-2.524.656, FR-A-2.530.038, EP-A-0 027 415). Le document FR-E-73 293 combine aussi plusieurs de ces solutions. Le document EP-A-0 093 108 propose une variante où chaque extrémité du fil présente une surépaisseur insérée à force dans une rainure de la monture, laquelle rainure présente une butée à chacune de ses extrémités pour réaliser un encliquetage de la surépaisseur.

Ces solutions sont onéreuses, et délicates à mettre en oeuvre pour fixer les verres car la précision requise est importante si l'on veut éviter tout jeu indésirable qui risquerait de laisser le verre s'échapper. De plus, toute opération de réglage implique des manipulations délicates et fastidieuses.

Par ailleurs, si l'on souhaite utiliser une monture de structure métallique filaire, par exemple un fil de titane, on ne dispose pas de suffisamment de matière pour usiner un canal servant à passer l'extrémité du fil. Ceci explique pourquoi les lunettes à monture filaire ont eu jusque-là des verres fixés par pincement (voir les documents US-A-718,363 et US-A- 2,588,505) ou plus souvent par vissage, les verres étant alors percés (voir les documents US-A-943 085, US-A-962 549, US-A-5 073 020, EP-A-0 554 341).

L'invention a pour but de concevoir un dispositif de fixation à éléments souples de cerclage permettant d'éviter tout perçage de la monture, tout en étant précis et simple à mettre en oeuvre pour les opérations de montage ou de démontage des verres.

L'invention a aussi pour but de concevoir un dispositif de fixation se prêtant particulièrement bien au cas des montures de structure métallique filaire.

Ce problème est résolu conformément à l'invention grâce à un dispositif de fixation des verres sur une monture de lunettes, comportant pour chaque verre un élément souple de cerclage passant dans un drageoir associé et s'accrochant sur la monture de part et d'autre du verre, caractérisé en ce que chaque élément souple est agencé pour présenter deux boucles d'extrémité qui s'accrochent sur la monture, de part et d'autre du verre concerné, par simple chevauchement.

Il suffit ainsi de mettre en place l'élément souple, en passant les deux boucles d'extrémité sur la monture, de chaque côté du verre, puis d'insérer le verre en faisant passer progressivement l'élément souple dans le drageoir du verre.

Dans le cas particulier d'une monture de structure métallique filaire, il est avantageux que la monture comporte, pour chaque verre, une portion cintrée entourant une partie du verre en passant dans un drageoir associé et se prolongeant, de part et d'autre du verre, par un tronçon plié de pontet et un tronçon plié d'extrémité temporale sur lesquels s'accrochent les deux boucles de l'élément souple. De préférence, pour chaque verre, les deux boucles de l'élément souple chevauchent la monture au niveau du coude reliant la portion cintrée de la monture à chaque tronçon plié.

Il est alors intéressant que le drageoir recevant la portion cintrée de la monture prolonge le drageoir recevant l'élément souple pour former un drageoir unique concernant toute la périphérie du verre.

Conformément à un mode d'exécution particulier, l'élément souple est constitué par un anneau filaire fermé qui est replié sur lui-même pour former deux brins juxtaposés passant dans le drageoir du verre concerné, le repliage dudit anneau formant directement les deux boucles d'extrémité de l'élément souple. Dans ce cas, les deux brins juxtaposés sont directement mis en place, l'un en avant et l'autre en arrière de la monture, de façon que les deux boucles fermées viennent naturellement chevaucher la monture. La mise en place est donc très rapide.

Conformément à un autre mode d'exécution, l'élément souple est constitué par un tronçon filaire refermé sur lui-même pour former un anneau dont les brins sont jointifs sur une partie centrale dudit élément souple en étant solidarisés l'un à l'autre au niveau des génératrices de contact, les deux parties à brins non jointifs formant les deux boucles d'extrémité. En variante, l'élément souple est constitué par un tronçon filaire dont les deux extrémités sont repliées sur elles-mêmes sur une longueur suffisante pour former les deux boucles d'extrémité, ces deux boucles d'extrémité pouvant par exemple être tenuees par un sertissage.

Dans ce cas, il faut enfiler les deux boucles l'une après l'autre sur la monture pour mettre en place l'élément souple. La mise en place est un peu moins rapide que dans le cas précédent, mais la fabrication de l'élément souple est plus aisée.

L'élément souple peut être constitué d'un fil de matière plastique, notamment nylon ou polytétrafluoréthylène, ou de matière naturelle, ou en variante d'un fil métallique, notamment un fil d'acier, de titane, ou d'or.

D'autres caractéristiques et avantages de l'invention apparaîtront plus clairement à la lumière de la description qui va suivre et des dessins annexés, concernant un mode de réalisation particulier, en référence aux figures où :
- la figure 1 illustre en perspective une paire de lunettes dont les deux verres sont fixés conformément à l'invention ;
- la figure 2 est une vue partielle éclatée permettant de mieux distinguer l'élément souple à boucles d'extrémité, réalisé ici sous la forme d'un anneau filaire fermé replié sur lui-même, avant sa mise en place pour fixer un verre ;
- la figure 3 est une vue partielle frontale montrant un verre monté conformément à l'invention avec l'élément souple précité ;
- la figure 4 est une vue selon IV-IV de la figure 3, à échelle agrandie, permettant de mieux distinguer l'une des boucles de l'anneau filaire fermé qui s'accroche en l'enjambant sur le tronçon plié d'extrémité temporale de la monture dont on distingue la portion cintrée (demi-cercle supérieur) ;
- la figure 5 est une vue frontale analogue à celle de la figure 3, pour un verre demi-lune, l'élément souple à boucles d'extrémité passant alors sur la périphérie supérieure du verre ;
- la figure 6 illustre une variante de l'élément souple précité, réalisé sous la forme d'un tronçon filaire replié sur lui-même et présentant, sur une partie centrale, des brins jointifs solidarisés ;
- la figure 7 est une coupe analogue à celle de la figure 4, avec l'élément souple de la figure 6 ;
- la figure 8 illustre une autre variante de l'élément souple précité, réalisé sous la forme d'un tronçon filaire à extrémités repliées ;
- la figure 9 est une coupe analogue à celle de la figure 4, avec l'élément souple de la figure 8.

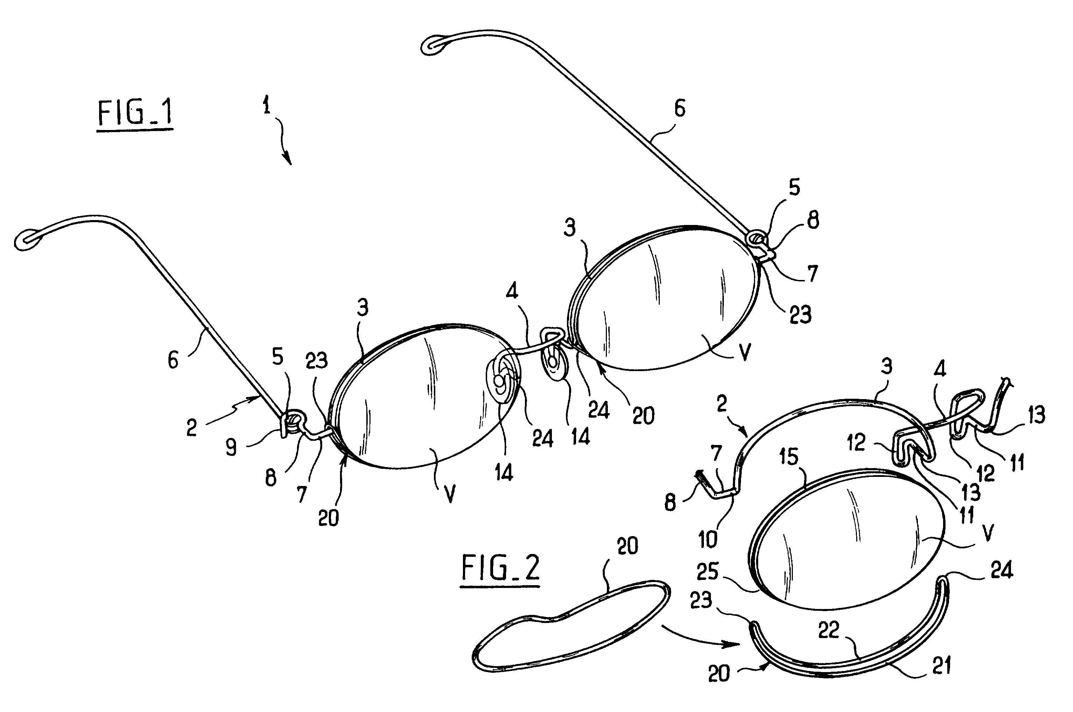

La figure 1 illustre une paire de lunettes 1 dont la monture 2, ici de structure métallique filaire, est équipée de deux verres V fixés chacun conformément à l'invention au moyen d'un élément souple 20 dont on distingue les deux boucles d'extrémité 23, 24 qui s'accrochent sur la monture, de part et d'autre du verre concerné, par simple chevauchement.

La monture 2 comporte une portion cintrée 3 (ou demi-cercle supérieur) entourant une partie de chaque verre V, et une portion centrale 4 formant pontet. Cet ensemble filaire unitaire est relié par deux charnières 5 à des branches 6.

En se référant aux figures 1 à 3, on constate que chaque portion cintrée 3 se prolonge d'un côté par un tronçon plié d'extrémité temporale 7, et de l'autre par un tronçon plié de pontet 11. Les tronçons 7 et 11 résultent d'un pliage de la monture au niveau d'un coude respectivement 10 et 13. Le tronçon d'extrémité temporale 7 est ensuite plié vers l'arrière pour former un tronçon 8 se terminant par une boucle recevant le barillet de la charnière 5, avec une pointe terminale 9 tournée vers le bas formant butée d'arrêt pour l'ouverture de la branche 6 associée. Le tronçon de pontet 11 se prolonge quant à lui par une boucle 12 servant à monter et maintenir une plaquette 14, et qui se raccorde à la portion centrale 4 du pontet.

S'agissant d'une monture de structure métallique filaire, par exemple en fil de titane, chaque verre V présente supérieurement un drageoir ou gorge 15 dans lequel passe la portion cintrée 3 associée de la monture.

Chaque verre V est fixé sur la monture par un élément souple de cerclage passant dans un drageoir associé et s'accrochant par chevauchement de ses deux boucles d'extrémité sur la monture, de part et d'autre du verre.

Conformément au mode de réalisation illustré aux figures 1 à 6, cet élément souple est constitué par un anneau filaire fermé 20, replié sur lui-même pour former deux brins juxtaposés notés 21, 22 passant dans un drageoir ou gorge 25 du verre concerné V, et le repliage dudit anneau formant directement les deux boucles d'extrémité 23, 24 qui s'accrochent sur la monture 2 par simple chevauchement.

En l'espèce, les deux boucles 23, 24 s'accrochent, en les chevauchant, respectivement sur les tronçons pliés d'extrémité temporale 7 et de pontet 11. Ce chevauchement se fait de préférence au niveau des coudes 10 et 13. Les boucles 23, 24 sont alors bien maintenues en place tout en étant très discrètes, et ne nuisent aucunement à l'esthétique.

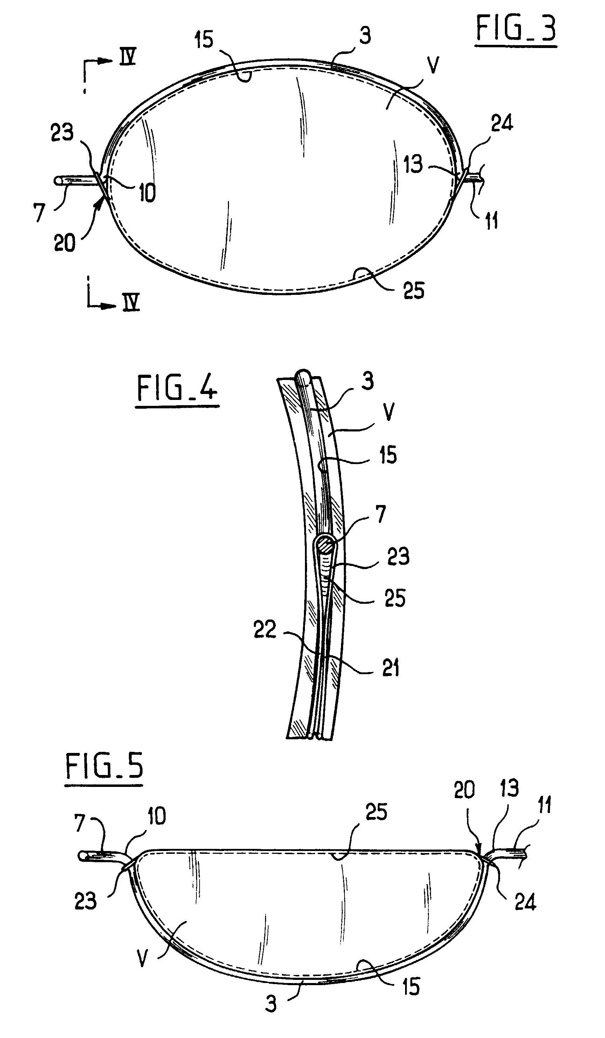

La vue latérale de la figure 4 permet de bien voir la disposition des deux brins juxtaposés 21, 22 de l'anneau filaire fermé 20 passant dans leur drageoir 25, et de la boucle 23 passant sur le tronçon 7 d'extrémité temporale associé à la portion cintrée 3 passant quant à elle dans le drageoir 15. Le drageoir 15 prolonge en fait le drageoir 25 pour former un drageoir unique concernant toute la périphérie du verre V, ce drageoir unique n'ayant pas nécessairement une largeur et une profondeur uniformes pour les deux parties qui le constituent. En effet, le diamètre de section de l'anneau filaire fermé 20 pourra, selon la matière dont il est constitué, descendre jusqu'à un dixième de millimètre, alors que le diamètre du fil constitutif des portions cintrées 3 de la monture est de l'ordre du millimètre.

La vue éclatée de la figure 2 montre l'anneau filaire fermé constituant l'élément souple 20, à l'état libre semi-circulaire, puis replié sur lui-même pour former les deux brins juxtaposés 21, 22 et les deux boucles d'extrémité 23, 24, dans la position qu'il occupe pour la fixation du verre. Dans la pratique, il suffit de passer l'élément souple annulaire 20 à l'état libre sur la portion cintrée 3, après quoi l'appui sur les tronçons 7, 11 forme naturellement les deux boucles 23, 24, les brins 21, 22 pendant alors librement sous la portion cintrée, respectivement en avant et en arrière de la monture 2. Le verre V est ensuite mis en place en appliquant la portion cintrée 3 sur le drageoir 15, puis on fait progressivement passer les deux brins 21, 22 dans le drageoir 25, en commençant par leur portion adjacente à l'une des deux boucles, au besoin en s'aidant d'un mince ruban intercalé entre le bord du verre et les deux brins de l'élément souple. Quand les deux brins 21, 22 ont été entièrement insérés dans leur drageoir 25, le verre est parfaitement maintenu en place sur la monture.

Le démontage d'un verre s'effectue tout aussi simplement en dégageant progressivement les deux brins 21, 22 de leur drageoir 25.

Lors du premier montage des verres, ou s'il apparaît un jeu au bout d'une certaine période d'utilisation, il peut s'avérer nécessaire de remplacer l'anneau filaire fermé par un autre anneau de diamètre légèrement inférieur. Dans la pratique, l'opticien disposera d'un jeu d'anneaux différant de l'un à l'autre d'environ un ou deux millimètres.

La figure 5 illustre un verre demi-lune fixé de la même façon (les mêmes références ont été utilisées). Dans ce cas, la portion cintrée 3 concerne la périphérie inférieure du verre, et l'élément souple 20 réalisé sous forme d'un anneau filaire fermé passe sur la périphérie supérieure du verre. La technique utilisée est donc la même, ce qui montre que l'invention n'est pas limitée à un mode de fixation des verres par le bas.

L'anneau filaire fermé 20 pourra être lisse sur toute sa longueur (par suite d'une soudure en bout des extrémités, ou d'une réalisation moulée) ou présenter un noeud ou un sertissage raboutant les deux extrémités d'un tronçon de fil. Dans ce cas, on s'arrangera pour que le noeud ou le sertissage soit aussi discret que possible, par exemple en prévoyant une petite encoche latérale d'un côté du verre qui permet de recevoir le noeud ou le sertissage et d'éviter tout glissement de celui-ci.

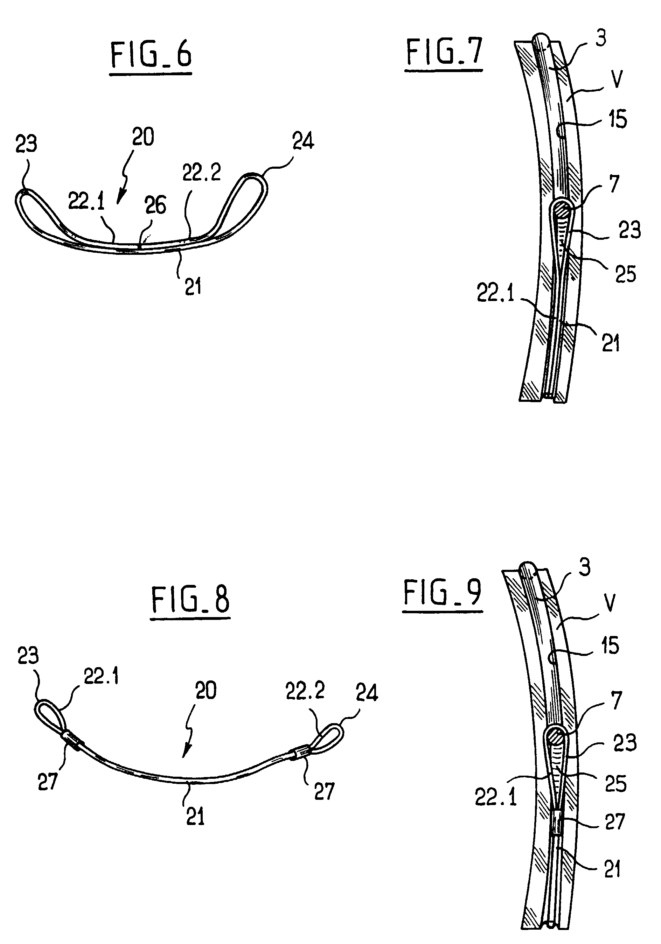

La variante illustrée aux figures 6 et 7 reprend le même concept d'élément souple à deux boucles d'extrémité en vue d'un accrochage par chevauchement. Cependant, l'élément souple 20 des figures 6 et 7 est constitué par un tronçon filaire refermé sur lui-même pour former un anneau dont les brins sont jointifs sur une partie centrale dudit élément, en étant solidarisés l'un à l'autre au niveau des génératrices de contact. On distingue ainsi le brin 21, ainsi qu'un brin 22 qui est coupé et présente alors deux portions notées 22.1, 22.2, ici agencées bout à bout en 26. Les bouts d'extrémité pourront en variante ne pas être jointifs. La solidarisation peut se faire par tout moyen, tel que soudure ou collage. Les deux parties à brins non jointifs forment alors les boucles d'extrémité 23, 24. Dans ce cas, il faut enfiler l'élément souple 20 par ses boucles 23, 24 en le faisant progressivement glisser sur la monture, jusqu'à sa position finale, après quoi le verre associé V est monté en faisant passer le double brin dans le drageoir 25 dudit verre.

Sur la variante des figures 8 et 9, l'élément souple 20 est constitué par un tronçon filaire dont les extrémités sont repliées sur elles-mêmes sur une longueur suffisante pour former les deux boucles d'extrémité. On trouve alors un brin long 21 passant dans le drageoir 25 du verre V associé, et un brin raccourci en deux portions 22.1 et 22.2 servant à la formation des deux boucles d'accrochage 23, 24 qui sont alors fermées par un noeud, une tresse, une soudure, ou encore comme illustré ici, en étant tenues par un sertissage noté 27, chaque boucle étant enfilée sur la monture de part et d'autre de la portion cintrée, avant de mettre en place le verre en faisant passer le brin long 21 dans le drageoir 25 du verre.

Dans tous les cas, l'élément souple 20 pourra être constitué d'un fil de matière plastique, par exemple un fil de nylon ou de polytétrafluoréthylène. Avec ce type de matériau, on pourra utiliser des fils très fins, dont le diamètre peut descendre jusqu'au dixième de millimètre. On pourra aussi utiliser un fil de matière naturelle, par exemple en crin, ou encore un fil métallique, par exemple en acier, titane, ou or, ou encore un fil textile ou un fil de caoutchouc.

Il va de soi que le dispositif de fixation selon l'invention n'est pas limité à un type particulier de monture. On pourra utiliser la plupart des montures métalliques, en matière plastique ou en matière naturelle, en fibres de carbone ou de verre, dans la mesure où l'on trouve une partie d'appui de chaque côté du verre pour accrocher l'élément souple par ses boucles d'extrémité. Dans ce cas, les verres seront en général biseautés supérieurement, sans drageoir, pour la mise en place contre la monture rigide, le seul drageoir étant alors celui servant à recevoir la partie centrale de l'élément souple. Aucun perçage de la monture n'est donc requis, contrairement aux techniques antérieures.

On pourra aussi utiliser des intercalaires rapportés entourant tout ou partie des verres, ainsi que cela est bien connu dans le domaine des montures de lunettes : dans ce cas le drageoir servant à faire passer la partie centrale de l'élément souple sera usiné non plus dans le verre mais dans l'intercalaire associé (variante non représentée).

Dans tous les cas, on obtient un mode de fixation à la fois simple et fiable, tout en étant peu coûteux. Les manipulations de montage/démontage des verres sont aisées et prennent très peu de temps, et la précision obtenue est très satisfaisante. L'esthétique est également optimale, car l'élément souple est pratiquement invisible.

L'invention n'est pas limitée au mode de réalisation qui vient d'être décrit, mais englobe au contraire toute variante reprenant, avec des moyens équivalents, les caractéristiques énoncées plus haut.

## Revendications

1. Dispositif de fixation des verres sur une monture de lunettes, comportant une monture et pour chaque verre (V) un élément souple de cerclage (20) pour passer dans un drageoir du verre (25) et pour s'accrocher sur la monture (2) de part et d'autre du verre (V), caractérisé en ce que chaque élément souple (20) est agencé pour présenter deux boucles d'extrémité (23, 24) qui s'accrochent sur la monture (2), de part et d'autre du verre concerné (V), par simple chevauchement.

2. Dispositif selon la revendication 1, dont la monture est de structure métallique filaire, caractérisé en ce que la monture (2) comporte pour chaque verre (V) une portion cintrée (3) entourant une partie du verre en passant dans un drageoir associé (15) et se prolongeant, de part et d'autre du verre, par un tronçon plié de pontet (11) et un tronçon plié d'extrémité temporale (7) sur lesquels s'accrochent les deux boucles (24, 23) de l'élément souple (20).

3. Dispositif selon la revendication 2, caractérisé en ce que, pour chaque verre (V), les deux boucles (23, 24) de l'élément souple (20) chevauchent la monture au niveau du coude (10, 13) reliant la portion cintrée (3) de la monture (2) à chaque tronçon plié (7, 11).

4. Dispositif selon la revendication 2 ou la revendication 3, caractérisé en ce qu'il comporte deux verres et pour chaque verre (V), le drageoir (15) recevant la portion cintrée (3) de la monture (2) prolonge le drageoir (25) recevant l'élément souple (20) pour former un drageoir unique concernant toute la périphérie du verre.

5. Dispositif selon l'une des revendications 1 à 4, caractérisé en ce que l'élément souple (20) est constitué par un anneau filaire fermé qui est replié sur lui-même pour former deux brins juxtaposés (21, 22) passant dans le drageoir (25) du verre concerné (V), le repliage dudit anneau formant directement les deux boucles d'extrémité (23, 24) de l'élément souple (20).

6. Dispositif selon l'une des revendications 1 à 4, caractérisé en ce que l'élément souple (20) est constitué par un tronçon filaire refermé sur lui-même pour former un anneau dont les brins (21 ; 22.1, 22.2) sont jointifs sur une partie centrale dudit élément souple en étant solidarisés l'un à l'autre au niveau des génératrices de contact, les deux parties à brins non jointifs formant les deux boucles d'extrémité (23, 24).

7. Dispositif selon l'une des revendications 1 à 4, caractérisé en ce que l'élément souple (20) est constitué par un tronçon filaire dont les deux extrémités sont repliées sur elles-mêmes sur une longueur suffisante pour former les deux boucles d'extrémité (23, 24).

8. Dispositif selon la revendication 7, caractérisé en ce que les deux boucles d'extrémité (23, 24) sont tenues par un sertissage (27).

9. Dispositif selon l'une des revendications 1 à 8, caractérisé en ce que l'élément souple (20) est constitué d'un fil de matière plastique, notamment nylon ou polytétrafluoréthylène, ou de matière naturelle.

10. Dispositif selon l'une des revendications 1 à 8, caractérisé en ce que l'élément souple (20) est constitué d'un fil métallique, notamment un fil d'acier, de titane, ou d'or.

## Patentansprüche

1. Vorrichtung zum Befestigen von Gläsern an einem Brillengestell umfassend ein Gestell und ein biegsames Umrandungselement (20) für jedes Glas (V), das in einer Rille des Glases (25) verläuft und zu beiden Seiten des Glases (V) am Brillengestell (2) zu befestigen ist, dadurch **gekennzeichnet**, daß jedes biegsame Element (20) derart ausgebildet ist, daß es zwei äußere Schlaufen (23, 24) hat, die zu beiden Seiten des betreffenden Glases (V) durch einfaches Überlappen am Gestell (2) befestigt werden.

2. Vorrichtung nach Anspruch 1, deren Gestell eine Metalldrahtstruktur hat, dadurch **gekennzeichnet**, daß das Gestell (2) für jedes Glas (V) einen gewölbten Bereich (3) hat, der einen Teil des Glases umgibt, wobei er sich in einer dazugehörigen Rille (15) erstreckt und sich zu beiden Seiten des Glases durch einen gebogenen Nasenstützbügel (11) und einen äußeren gebogenen Schläfenbügel (7) fortsetzt, an denen die beiden Schlaufen (24, 23) des biegsamen Elementes (20) befestigt werden.

3. Vorrichtung nach Anspruch 2, dadurch **gekennzeichnet**, daß die beiden Schlaufen (23, 24) des biegsamen Elementes (20) das Gestell für jedes Glas (V) in Höhe des abgewinkelten Bereichs (10, 13) überlappen, welcher den gewölbten Bereich (3) des Gestells (2) mit jedem gebogenen Abschnitt (7, 11) verbindet.

4. Vorrichtung nach Anspruch 2 oder 3, dadurch **gekennzeichnet**, daß diese zwei Gläser umfaßt, und die Rille (15), die den gewölbten Bereich (3) des Gestells (2) aufnimmt, die Rille (25), die das biegsame Element (20) aufnimmt, für jedes Glas (V) fortsetzt, um eine einzige, den gesamten Rand des Glases betreffende Rille zu formen.

5. Vorrichtung nach einem der Ansprüche 1 bis 4, dadurch **gekennzeichnet**, daß das biegsame Element (20) aus einem geschlossenen Fadenring besteht, der in sich zusammengelegt wird, um zwei nebeneinanderliegende Stränge (21, 22) auszubilden, die sich in der Rille (25) des betreffenden Glases (V) erstrecken, wobei durch das Zusammenlegen des Ringes direkt die beiden äußeren Schlaufen (23, 24) des biegsamen Elements (20) gebildet werden.

6. Vorrichtung nach einem der Ansprüche 1 bis 4, dadurch **gekennzeichnet**, daß das biegsame Element (20) aus einem Fadenabschnitt gebildet wird, der in sich geschlossen ist, um einen Ring auszubilden, dessen Stränge (21; 22.1, 22.2) auf einem zentralen Abschnitt des biegsamen Elements dicht aneinander liegen und dabei im Bereich einander berührender Mantellinien aneinander gedrückt sind, wobei die beiden Abschnitte, deren Stränge nicht dicht aneinander liegen, die beiden äußeren Schlaufen (23, 24) bilden.

7. Vorrichtung nach einem der Ansprüche 1 bis 4, dadurch **gekennzeichnet**, daß das biegsame Element (20) aus einem Fadenabschnitt gebildet wird, dessen beiden Endabschnitte über eine ausreichende Länge zusammengelegt sind, um die beiden äußeren Schlaufen (23, 24) zu bilden.

8. Vorrichtung nach Anspruch 7, dadurch **gekennzeichnet**, daß die beiden äußeren Schlaufen (23, 24) durch das Anlegen einer Klammer (27) gehalten werden.

9. Vorrichtung nach einem der Ansprüche 1 bis 8, dadurch **gekennzeichnet**, daß das biegsame Element (20) von einem Faden aus einem Kunststoffmaterial, insbesondere aus Nylon oder Polytetrafluoräthylen, oder aus einem natürlichen Material gebildet wird.

10. Vorrichtung nach einem der Ansprüche 1 bis 8, dadurch **gekennzeichnet**, daß das biegsame Element (20) aus einem Metalldraht, insbesondere aus einem Stahl-, Titan- oder Golddraht, gebildet wird.

## Claims

1. Apparatus for fixing lenses to a spectacles frame, the apparatus comprising a frame and, for each lens (V), a flexible rim element (20) for passing along an associated bezel (25) of the lens and for being secured to the frame (2) on either side of the lens (V), said apparatus being characterized in that each flexible element (20) is organized to have two end loops (23, 24) which are secured to the frame (2) on either side of the lens (V) in question, merely by engaging over said frame.

2. Apparatus according to claim 1, in which the frame is of metal wire structure, said apparatus being characterized in that, for each lens (V), the frame (2) comprises a curved portion (3) surrounding a portion of the lens by passing along an associated bezel (15) and being extended on either side of the lens by a bridge hook (11) and by a temple hook (7) to which the two loops (24, 23) of the flexible element (20) are secured.

3. Apparatus according to claim 2, characterized in that, for each lens (V), the two loops (23, 24) of the flexible element (20) engage over the frame at the bends (10, 13) connecting the shaped portion (3) of the frame (2) to the respective hooks (7, 11).

4. Apparatus according to claim 2 or 3, characterized in that it comprises two lenses and, for each lens (V), the bezel (15) receiving the shaped portion (3) of the frame (2) extends the bezel (25) receiving the flexible element (20) so as to form a single bezel running along the entire periphery of the lens.

5. Apparatus according to any one of claims 1 to 4, characterized in that the flexible element (20) is constituted by a filamentary band which is folded over to form two juxtaposed strands (21, 22) passing along the bezel (25) in the lens in question (V), the folding of said band directly forming the two end loops (23, 24) of the flexible element (20) .

6. Apparatus according to any one of claims 1 to 4, characterized in that the flexible element (20) is constituted by a filamentary segment looped back on itself to form a band whose strands (21; 22.1, 22.2) touch each other over a central portion of said flexible element and they are secured to each other along the contacting generator lines, the two portions in which the strands do not touch forming the two end loops (23, 24).

7. Apparatus according to any one of claims 1 to 4, characterized in that the flexible element (20) is constituted by a filamentary segment whose two ends are folded over far enough to form the two end loops (23, 24).

8. Apparatus according to claim 7, characterized in that the two end loops (23, 24) are held by crimping (27).

9. Apparatus according to any one of claims 1 to 8, characterized in that the flexible element (20) is constituted by a thread made of a plastics material, in particular nylon or polytetrafluoroethylene, or of a natural material.

10. Apparatus according to any one of claims 1 to 8, characterized in that the flexible element (20) is constituted by a metal wire, in particular a steel, titanium, or gold wire.
